(19) Europäisches Patentamt
European Patent Office
Office européen des brevets

(11) **EP 1 332 911 B1**

(12) **EUROPÄISCHE PATENTSCHRIFT**

(45) Veröffentlichungstag und Bekanntmachung des Hinweises auf die Patenterteilung:
**09.04.2008 Patentblatt 2008/15**

(51) Int Cl.:
*B60W 30/18* <sup>(2006.01)</sup>  *F16H 61/02* <sup>(2006.01)</sup>

(21) Anmeldenummer: **03000973.2**

(22) Anmeldetag: **17.01.2003**

(54) **Verfahren zum Betreiben einer Brennkraftmaschine eines Kraftfahrzeuges**

Engine control method for vehicles

Procédé de commande d'un moteur à combustion dans un véhicule

(84) Benannte Vertragsstaaten:
**AT BE BG CH CY CZ DE DK EE ES FI FR GB GR HU IE IT LI LU MC NL PT SE SI SK TR**

(30) Priorität: **05.02.2002 DE 10204593**

(43) Veröffentlichungstag der Anmeldung:
**06.08.2003 Patentblatt 2003/32**

(73) Patentinhaber: **Volkswagen Aktiengesellschaft
38436 Wolfsburg (DE)**

(72) Erfinder:
• **Jelden, Hanno**
  **38518 Gifhorn (DE)**
• **Schultalbers, Matthias**
  **38536 Meinersen/Ahnsen (DE)**
• **Sprysch, Andreas**
  **31234 Edemissen (DE)**
• **Manemann, Petra**
  **38518 Gifhorn (DE)**

(56) Entgegenhaltungen:
EP-A- 1 078 804     DE-A1- 4 322 476
DE-A1- 19 508 889     US-A1- 2001 051 847

**Beschreibung**

Die Erfindung betrifft ein Verfahren zum Betreiben einer Brennkraftmaschine eines Kraftfahrzeuges mit einem Getriebe und einem Getriebesteuergerät, gemäß dem Oberbegriff des Anspruchs 1.

Bei einem Betriebsartenmanagement einer Brennkraftmaschine eines Kraftfahrzeuges ist es das Ziel, unnötige Umschaltungen der Betriebsart zu vermeiden und möglichst immer in einem verbrauchsoptimierten Betrieb, beispielsweise einem Magerbetrieb eines Benzin-Direkteinspritzers, zu fahren. EP-A-1078804 zeigt ein Verfahren gemäß dem Oberbegriff des Anspruchs 1.

Der Erfindung liegt die Aufgabe zugrunde, eine Verfahren der obengenannten Art zur Verfügung zu stellen, welches bezüglich des Betriebsartenmanagements während eines Gangwechsels verbessert ist.

Diese Aufgabe wird erfindungsgemäß durch ein Verfahren der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß bei einem Wechsel von einem bisherigen Gang in einen neuen Gang des Getriebes aus einer Sollganginformation gangauti aus dem Getriebesteuergerät ein entsprechendes Übersetzungsverhältnis uefktgetpl für den neuen Gang bestimmt und aus dem Übersetzungsverhältnis uefktgetpl eine Motordrehzahl nmotp_w für den neuen Gang berechnet, ein Fahrerwunschmoment mifap_w für den neuen Gang abgeschätzt und ein physikalisches Beschleunigungsmoment mib_w für den neuen Gang abgeschätzt wird, wobei aus der Motordrehzahl nmotp_w für den neuen Gang und dem Fahrerwunschmoment mifap_w für den neuen Gang ein Betriebsartenfahrerwunsch bestimmt und während der Getriebeschaltung in die Betriebsart gemäß Betriebsartenfahrerwunsch gewechselt und das Beschleunigungsmoment für den neuen Gang eingestellt wird.

Dies hat den Vorteil, daß bei einem Gangwechsel der Einfluß einer nicht momentenneutralen Betriebsartenumschaltung minimiert und ferner so früh wie möglich in eine verbrauchsoptimale Betriebsart geschaltet wird. Desweiteren wird ruckfrei ein nach der Getriebeschaltung erforderliches Beschleunigungsmoment frühzeitig eingestellt. Für den Fall, daß während der Getriebeschaltung das maximal darstellbare Moment nicht ausreicht, um die Motordrehzahl zumindest bei geöffneter Kupplung konstant zu halten, wird eine Betriebsartenumschaltung eingeleitet. Dies verhindert wirksam, daß der Motor während des Schaltvorganges ggf. ausgeht. Eine entsprechend hohe und ggf. kurzzeitige Dynamikanfordung an den Motor für eine Drehzahleinregelung während einer Getriebeschaltung wird dadurch bei der Kontrolle einer Drehmomenteinstellbarkeit berücksichtigt.

Die Betriebsart umfaßt beispielsweise einen Magerbetrieb, einen λ=1 Betrieb und/oder einen Schichtbetrieb der Verbrennung in der Brennkraftmaschine.

Zweckmäßigerweise wird die Umschaltung der Betriebsart und die Änderung des Beschleunigungsmomentes durchgeführt, während eine Kupplung geöffnet ist. Das Übersetzungsverhältnis uefktgetpl wird aus der Sollganginformation gangauti bevorzugt mittels einer Kennlinie KLUEFKTG bestimmt.

Die Motordrehzahl nmotp_w wird bevorzugt gemäß folgender Formel berechnet,

$$nmotp\_w = \frac{uefktgetpl}{STRFKT} \cdot vfzg\_w$$

wobei STRFKT ein physikalischer Streckenfaktor und vfzg_w eine Fahrzeuggeschwindigkeit ist.

Das physikalische Beschleunigungsmoment mib_w wird bevorzugt gemäß folgender Formel berechnet,

$$mib\_w = JTRAEG \cdot \frac{nmotp\_w - nmot\_w}{TSYNER}$$

wobei JTRAEG ein Massenträgheitsmoment, nmot_w eine Istdrehzahl der Brennkraftmaschine und TSYNER eine vorbestimmte Zeitspanne für die Drehzahländerung ist.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in

Fig. 1    ein schematisches Blockschaltbild einer erfindungsgemäßen Betriebsartenprädiktion,

Fig. 2    ein schematisches Funktionsdiagramm des Funktionsblockes "Prädiktion der Motordrehzahl" gemäß Fig. 1,

Fig. 3     ein schematisches Funktionsdiagramm des Funktionsblockes "Prädiktion Fahrerwunsch" gemäß Fig. 1 und

Fig. 4     ein schematisches Funktionsdiagramm des Funktionsblockes "Prädiktion Beschleunigungsmoment" gemäß Fig. 1.

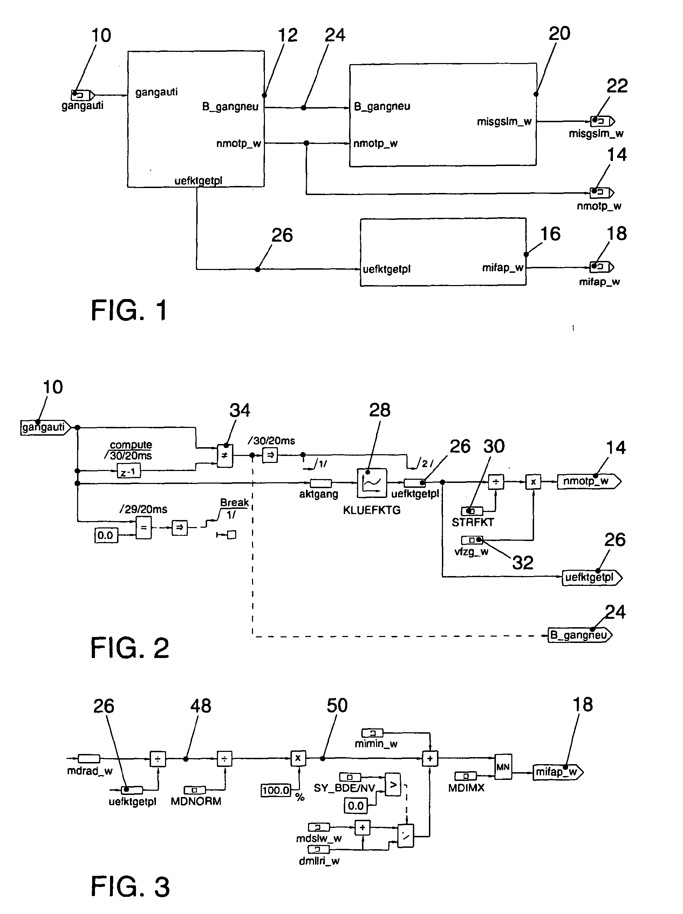

Fig. 1 zeigt ein schematisches Blockschaltbild einer erfindungsgemäßen Betriebsartenprädiktion. Während einer Getriebeschaltung werden mit Hilfe einer Sollganginformation gangauti 10 von einem nicht dargestellten Getriebesteuergerät in einem Funktionsblock "Prädiktion Motordrehzahl" 12 eine Motordrehzahl nmotp_w 14 und in einem Funktionsblock "Prädiktion Fahrerwunsch" 16 ein Fahrerwunschmoment mifap_w 18 nach der Schaltung sowie in einem Funktionsblock "Prädiktion Beschleunigungsmoment" 20 ein für die Drehzahleinregelung notwendige Beschleunigungsmoment misgslm_w 22 prädiziert. Der Funktionsblock 20 "Prädiktion Beschleunigungsmoment" erhält zusätzlich aus dem Funktionsblock 12 "Prädiktion Motordrehzahl" ein Bit B_gangneu 24, welches das Einlegen eines neuen Ganges anzeigt. Der Funktionsblock 16 "Prädiktion Fahrerwunsch mifap_w 18" erhält aus dem Funktionsblock 12 "Prädiktion Motordrehzahl nmotp_w 14" als Eingangswert ein Übersetzungsverhältnis uefktgetpl 26.

Aus der prädizierten Motordrehzahl nmotp_w 14 und dem prädizierten Fahrerwunsch mifap_w 18 wird ein Betriebsartenfahrerwunsch bestimmt, der sich nach der Getriebeschaltung einstellen wird. Mit dieser Information wird schon während geöffneter Kupplung in die zukünftige Betriebsart gemäß Betriebsartenfahrerwunsch gewechselt werden, wodurch wegen des getrennten Antriebsstranges ein Momentenruck umgangen wird. Außerdem kann somit frühzeitig in die neue Betriebsart gewechselt werden. Ebenso wird das prädizierte Beschleunigungsmoment misgslm_w 22 bei geöffneter Kupplung während der Getriebeschaltung als Beschleunigungsmoment an eine Funktion "Drehmomenteinstellbarkeit" weitergegeben, d.h. das prädizierte Beschleunigungsmoment misgslm_w 22 wird eingestellt. Dadurch ist eine gezielte Auslösung einer Betriebsartenumschaltung möglich.

Fig. 2 veranschaulicht die Funktionsweise des Blockes 12 "Prädiktion Motordrehzahl". Aus der Sollganginformation gangauti 10 wird über eine Kennlinie KLUEFKTG 28 das Übersetzungsverhältnis uefktgetpl 26 bestimmt. Ferner wird die Motordrehzahl nmotp_w 14 mittels folgender Formel prädiziert:

$$nmotp\_w = \frac{uefktgetpl}{STRFKT} \cdot vfzg\_w$$

wobei STRFKT 30 ein physikalischer Streckenfaktor und vfzg_w 32 eine Fahrzeuggeschwindigkeit ist. Über einen Vergleich der momentanen Sollganginformation gangauti 10 mit einer vorherigen Sollganginformation gangauti 10 wird in Block 34 bestimmt, ob ein Gangwechsel vorliegt. Ist dies der Fall, so wird das Bit B_gangneu 24 gesetzt.

Wie aus Fig. 3 ersichtlich, wird mit dem neuen Übersetzungsverhältnis uefktgetpl 26 das Fahrerwunschmoment mifap_w 18 prädiziert. Aus dem physikalischen Wunschmoment mdrad_w ergibt sich durch Division durch das prädizierte Übersetzungsverhältnis uefktgetpl des zukünftigen Ganges das physikalische Kurbelwellenmoment 48. Zur weiteren Verwendung im Motorsteuergerät wird dieses physikalische Kurbelwellenmoment 48 in ein indiziertes relatives Motormoment umgerechnet. Dies erfolgt durch Normierung auf MDNORM und anschließende Berechnung eines relativen Motormomentes in %. Bei 50 liegt das relative, indizierte Kurbelwellenmoment vor. Durch Addition des minimalen Verlustmomentes mimin_w sowie des Leerlaufregler-Anteils dmllri_w und der Ladungswechselverluste mdslw_w erhält man das relative indizierte Motormoment.

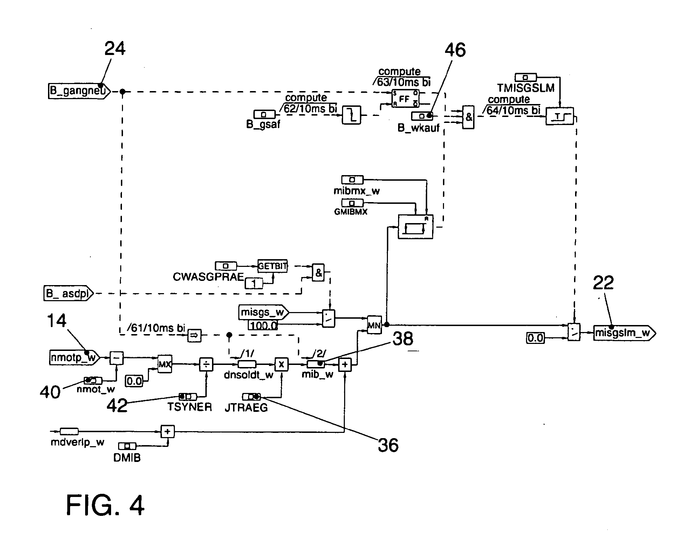

Wie aus Fig. 4 ersichtlich, wird aus der prädizierten Motordrehzahl nmotp_w 14 und einem Massenträgheitsmoment JTRAEG 36 ein physikalisches Beschleunigungsmoment mib_w 38 ermittelt, welches für die Drehzahlregelung bei geöffnetem Antriebsstrang zur Verfügung stehen muß. Diese Ermittlung erfolgt nach der Formel

$$mib\_w = JTRAEG \cdot \frac{nmotp\_w - nmot\_w}{TSYNER}$$

wobei nmot_w 40 eine Istdrehzahl der Brennkraftmaschine und TSYNER 42 eine vorbestimmte Zeitspanne für die Drehzahländerung ist. Das physikalische Beschleunigungsmoment mib_w 38 wird auf das von einem nicht dargestellten Drehzahlregler geforderte Sollmoment misgs_w 44 begrenzt und bei geöffneter Kupplung während einer Getriebeschaltung als Beschleunigungsmoment misgslm_w 22 an die Funktion "Drehmomenteinstellbarkeit" weitergegeben, dadurch ist eine gezielte Auslösung einer Betriebsartenumschaltung möglich. Ein gesetztes Bit B_wkauf 46 signalisiert eine geöffnete Kupplung und das gesetzte Bit B_gangneu 24 signalisiert eine Getriebeschaltung.

Erfindungsgemäß wird somit das Beschleunigungsmoment misgslm_w 22 prädiziert, welches für eine Drehzahleinregelung erforderlich ist und dadurch in der Drehmomenteinstellbarkeit gezielt die Dynamikanforderung während der Getriebeschaltung berücksichtigt. Zu Beginn der Getriebeschaltung wird sowohl die zukünftige Motordrehzahl nmotp_ w 12 als auch der Fahrerwunsch mifap_w 16 prädiziert. Aus diesen beiden Größen wird die Betriebsart nach der Getriebeschaltung bestimmt und entsprechend noch bei geöffneter Kupplung, d.h. besonders frühzeitig und ohne Momentenruck, eingestellt. Mit anderen Worten wird bei noch geöffneter Kupplung die Betriebsart gewechselt, wodurch der Einfluß einer nicht momentenneutralen Betriebsartenumschaltung minimiert wird. Außerdem wird auf diese Weise so früh wie möglich in die verbrauchsoptimierte Betriebsart geschaltet.

**Patentansprüche**

1. Verfahren zum Betreiben einer Brennkraftmaschine eines Kraftfahrzeuges mit einem Getriebe und einem Getriebesteuergerät, **dadurch gekennzeichnet, daß** bei einem Wechsel von einem bisherigen Gang in einen neuen Gang des Getriebes aus einer Sollganginformation (gangauti) aus dem Getriebesteuergerät ein entsprechendes Übersetzungsverhältnis (uefktgetpl) für den neuen Gang bestimmt und aus dem Übersetzungsverhältnis (uefktgetpl) eine Motordrehzahl (nmotp_w) für den neuen Gang berechnet, ein Fahrerwunschmoment (mifap_w) für den neuen Gang abgeschätzt und ein physikalisches Beschleunigungsmoment (mib_w) für den neuen Gang abgeschätzt wird, wobei aus der Motordrehzahl (nmotp_w) for den neuen Gang und dem Fahrerwunschmoment (mifap_w) für den neuen Gang ein Betriebsartenfahrerwunsch bestimmt und während der Getriebeschaltung in die Betriebsart gemäß Betriebsartenfahrerwunsch gewechselt und das Beschleunigungsmoment für den neuen Gang eingestellt wird.

2. Verfahren nach Anspruch 1, **dadurch gekennzeichnet, daß** die Betriebsart einen Magerbetrieb, einen λ=1 Betrieb und/oder einen Schichtbetrieb der Verbrennung in der Brennkraftmaschine umfaßt.

3. Verfahren nach Anspruch 1 oder 2, **dadurch gekennzeichnet, daß** die Umschaltung der Betriebsart und die Änderung des Beschleunigungsmomentes durchgeführt wird, während eine Kupplung geöffnet ist.

4. Verfahren nach wenigstens einem der vorhergehenden Ansprüche, **dadurch gekennzeichnet, daß** das Übersetzungsverhältnis (uefktgetpl) aus der Sollganginformation (gangauti) mittels einer Kennlinie (KLUEFKTG) bestimmt wird.

5. Verfahren nach wenigstens einem der vorhergehenden Ansprüche, **dadurch gekennzeichnet, daß** die Motordrehzahl (nmotp_w) gemäß folgender Formel berechnet wird,

$$nmotp\_w = \frac{uefktgetpl}{STRFKT} \cdot vfzg\_w$$

wobei STRFKT ein physikalischer Streckenfaktor und vfzg_w eine Fahrzeuggeschwindigkeit ist.

6. Verfahren nach wenigstens einem der vorhergehenden Ansprüche, **dadurch gekennzeichnet, daß** das physikalische Beschleunigungsmoment mib_w gemäß folgender Formel berechnet wird,

$$mib\_w = JTRAEG \cdot \frac{nmotp\_w - nmot\_w}{TSYNER}$$

wobei JTRAEG ein Massenträgheitsmoment, nmot_w eine Istdrehzahl der Brennkraftmaschine und TSYNER eine vorbestimmte Zeitspanne für die Drehzahländerung ist.

**Claims**

1. Method for operating an internal combustion engine of a motor vehicle having a gearbox and a gearbox control device, **characterized in that** when the gearbox is changed from a previous gearspeed into a new gearspeed a corresponding transmission ratio (uefktgetpl) for the new gearspeed is determined from setpoint gearspeed information (gangauti) from the gearbox control device, and an engine speed (nmotp_w) is calculated for the new gearspeed from the transmission ratio (uefktgetpl), a driver's request torque (mifap_w) for the new gearspeed is estimated and a physical acceleration torque (mib_w) for the new gearspeed is estimated, wherein an operating mode driver's request is determined from the engine speed (nmotp_w) for the new gearspeed and the driver's request torque (mifap_w) for the new gearspeed, and the gearbox is changed into the operating mode according to the operating mode driver's request during the gearbox shifting operation, and the acceleration torque for the new gearspeed is set.

2. Method according to Claim 1, **characterized in that** the operating mode comprises a lean mode, $\lambda = 1$ and/or a stratified mode of the combustion in the internal combustion engine.

3. Method according to Claim 1 or 2, **characterized in that** the switching over of the operating mode and the changing of the acceleration torque are carried' out while a clutch is opened.

4. Method according to at least one of the preceding claims, **characterized in that** the transmission ratio (uefktgetpl) is determined from the setpoint gearspeed information (gangauti) by means of a characteristic curve (KLUEFKTG).

5. Method according to at least one of the preceding claims, **characterized in that** the engine speed (nmotp_w) is calculated according to the following formula,

$$\text{nmotp\_w} = \frac{\text{uefktgetpl}}{\text{STRFKT}} \cdot \text{vfzg\_w}$$

where STRFKT is a physical route factor and vfzg_w is a vehicle speed.

6. Method according to at least one of the preceding claims, **characterized in that** the physical acceleration torque mib_w is calculcated according to the following formula,

$$\text{mib\_w} = \text{JTRAEG} \frac{\text{nmotp\_w} - \text{nmot\_w}}{\text{TSYNER}}$$

where JTRAEG is a moment of mass inertia, nmot_w is an actual rotational speed of the internal combustion engine and TSYNER is a predetermined time period for the changing of the rotational speed.

**Revendications**

1. Procédé de commande d'un moteur à combustion interne d'un véhicule automobile comprenant une boîte de vitesses et un appareil de commande de boîte de vitesses, **caractérisé en ce que** dans le cas d'un changement d'une vitesse antérieure à une nouvelle vitesse de la boîte de vitesses, un rapport de transmission correspondant (uefktgetpl) pour la nouvelle vitesse est déterminé à partir d'une information de vitesse de consigne (gangauti) provenant de l'appareil de commande de boîte de vitesses, et un régime du moteur (nmotp_w) pour la nouvelle vitesse est calculé à partir du rapport de transmission (uefktgetpl), un couple souhaité par le conducteur (mifap_w) pour la nouvelle vitesse est estimé et un couple d'accélération physique (mib_w) pour la nouvelle vitesse est estimé, un souhait du conducteur relatif au type de fonctionnement étant déterminé à partir du régime du moteur (nmop_w) pour la nouvelle vitesse et à partir du couple souhaité par le conducteur (mifap_w) pour la nouvelle vitesse, et pendant le changement de vitesse, le type de fonctionnement correspondant au souhait du conducteur relatif au type de fonctionnement étant modifié et le couple d'accélération pour la nouvelle vitesse étant ajusté.

2. Procédé selon la revendication 1, **caractérisé en ce que** le type de fonctionnement inclut un fonctionnement à mélange pauvre, un fonctionnement avec $\lambda = 1$ et/ou un fonctionnement stratifié de la combustion dans le moteur à combustion interne.

**3.** Procédé selon la revendication 1 ou 2, **caractérisé en ce que** la commutation du type de fonctionnement et la variation du couple d'accélération sont effectuées quand un embrayage est ouvert.

**4.** Procédé selon au moins l'une quelconque des revendications précédentes, **caractérisé en ce que** le rapport de transmission (uefktgetpl) est déterminé à partir de l'information de vitesse de consigne (gangauti) au moyen d'une caractéristique (KLUEFKTG).

**5.** Procédé selon au moins l'une quelconque des revendications précédentes, **caractérisé en ce que** le régime du moteur (nmotp_w) est calculé selon la formule suivante :

$$nmotp\_w = \frac{uefktgetpl}{STRFKT} \cdot vfzg\_w$$

avec STRFKT étant un facteur physique linéaire et vfzg_w étant une vitesse du véhicule.

**6.** Procédé selon au moins l'une quelconque des revendications précédentes, **caractérisé en ce que** le couple d'accélération physique mib_w est calculé selon la formule suivante :

$$mib\_w = JTRAEG \cdot \frac{nmotp\_w - nmot\_w}{TSYNER}$$

avec JTRAEG étant un couple d'inertie de masse, nmot_w un régime réel du moteur à combustion interne et TSYNER un intervalle de temps prédéterminé pour la variation du régime.

**FIG. 1**

**FIG. 2**

**FIG. 3**

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1078804 A